# EUROPEAN PATENT APPLICATION

(11) **EP 0 560 734 A1**
(43) Date of publication of application: **15.09.1993**
(21) Application number: 93830065.4
(22) Date of filing: 23.02.1993
(51) Int. Cl.: A23G 9/28, A23G 9/16

(54) **A feeding device of biscuits to a machine for the formation of biscuits ices**

(30) Priority: 10.03.1992 IT RM920162
(71) Applicant: PROCMA S.r.l., I-04016 Sabaudia (LT) (IT)
(72) Inventor: Pagliarella, Tonino, I-04014 PONTINA(LT) (IT)
(74) Representative: Lanzoni, Luciano

(57) **Abstract**

The invention relates to a feeding device of biscuits to a machine for the formation of biscuit ices, comprising a pluraity of hoppers or channels (16) having a curved development, each of which is supported by the stem of a pneumatic cylinder (15) ; a drawer (9) in which a plurality of holes or inserts (12) are bored, having a number which corresponds to the number of channels (16) or inserts (12) equipped with alternating translatory movement in a direction corresponding to the flow of the ice creams as well as an alternating vertical movement for the positioning of the upper biscuit at a predetermined height with respect to the underlying biscuit.

## Description

The invention relates to a device for feeding biscuits to a machine for the formation of biscuit ices. By the term "biscuit ices", the insertion of a layer of ice cream between two biscuits is intended.

Prior art devices envisage two vertical biscuit feeding channels which are deposited by force of gravity on plates with inserts in them, which plates transfer, still by force of gravity, the biscuits on to the ice cream.

Prior art devices exhibit some drawbacks due to the fact that the finished biscuit ice does not always have the same thickness, causing some difficulties in the subsequent packing of the biscuit ice.

Another drawback is due to the fact that the flow of biscuits in the vertical channels can become blocked because of the formation of bridges, and furthermore in the passage between the channel and the underlying insert there often occur biscuit breakage and a subsequent crumbling.

When this happens, it becomes necessary to stop the entire ice cream formation plant and proceed to the removal of all the biscuit detritus, a very difficult and long operation since it is necessary to dismount the feeding channels.

The aim of the present invention is to obviate the above inconveniences and in particular to realise a biscuit feeding device able to create a finished product, being biscuit ices, of constant thicknesses.

The invention, as it is characterised in the claims that follow, solve the problem of providing a biscuit feeding device to a machine for the formation of biscuit ices which, from a general pont of view is characterised in that it comprises:
- a plurality of curved hoppers or channels each of which is supported by the stem of a pneumatic cylinder which permits a translation of the said hoppers or channels in a vertical direction;
- a drawer in which a plurality of holes or inserts are bored, corresponding in number to the number of channels, said drawer being equipped with horizontal alternating movement to bring the said holes or inserts from a position underlying the unloading mouths of the channels to a position overlying the flow of the ices;
- a plurality of suction tubes corresponding in number to the number of channels or inserts, which suction tubes are equipped with alternating translatory motion in a direction corresponding to the flow direction of the ices as well as being further equipped with an alternating vertical movement forthe positioning of the biscuit superiorly at a pre-established height with respect to the lower biscuit.

Further characteristics and advantages of the present invention will better emerge from the detailed description that follows, of an embodiment of the invention, herein illustrated purely in the form of a nonlimiting example in the accompanying figures, in which:
- figure 1 shows the device in perspective view;
- figure 2 shows the device in a plan view;
- figure 3 shows the device is a frontal view in section according to the line II-II of figure 2;
- figure 4 shows the device in a lateral view, sectioned according to line III-III of figure 3.

With reference to the figures, 1 denotes a support frame of all the device which serves to feed biscuits to a machine for the formation of ices 3 of the type producing two biscuits 3 between which a layer of ice cream is laid.

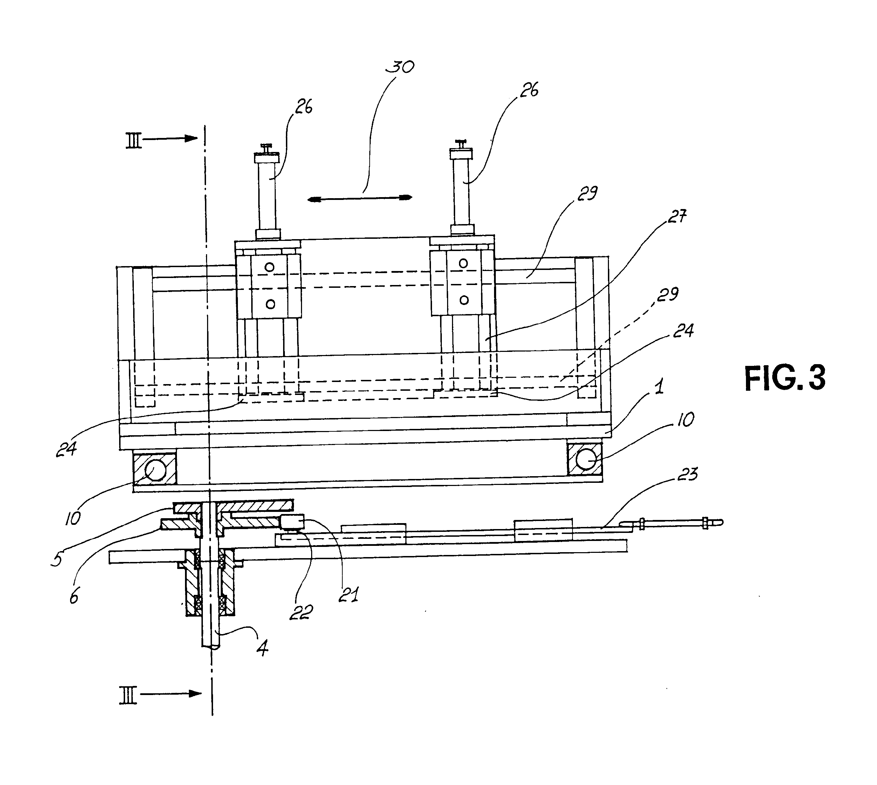

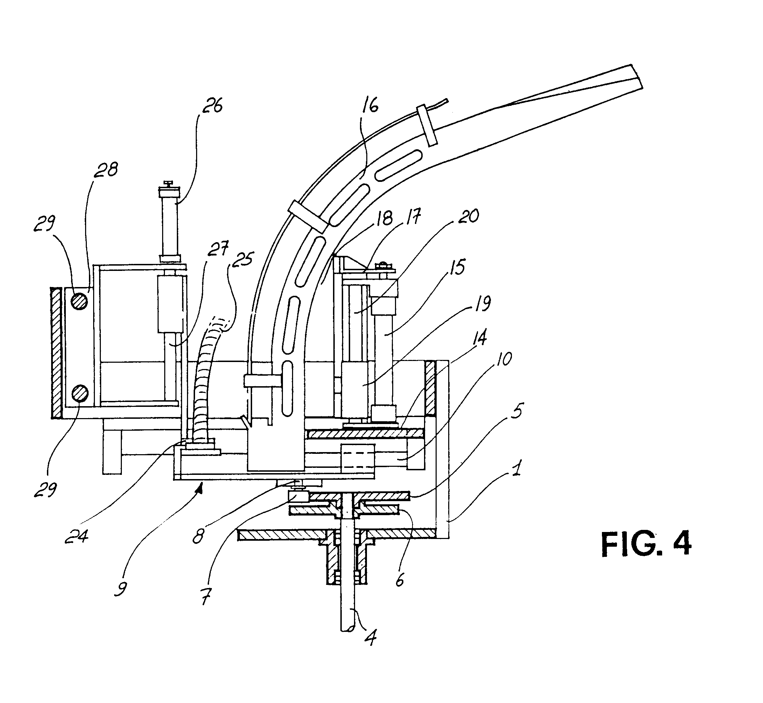

The frame 1 supports a motorised shaft 4 on which two cams are keyed, respectively denoted by 5 and 6 (figures 3 and 4).

As is shown in figure 4, an idler roller 7 is kept elastically pressed against the cam 5, which idler roller 7 is idle on a shaft 8 and solid with a drawer 9 which drawer 9 is slidable on two guide bars 10.

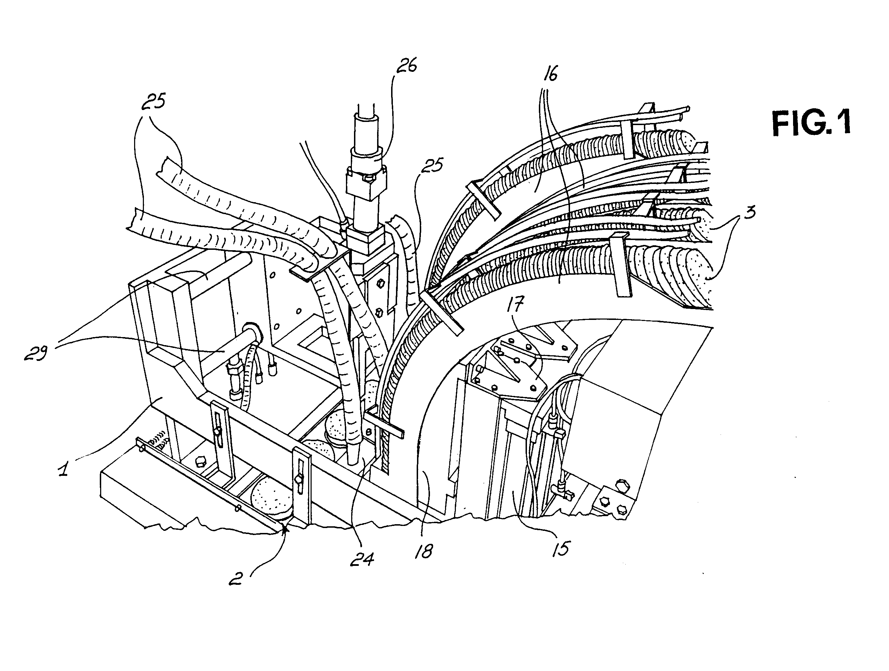

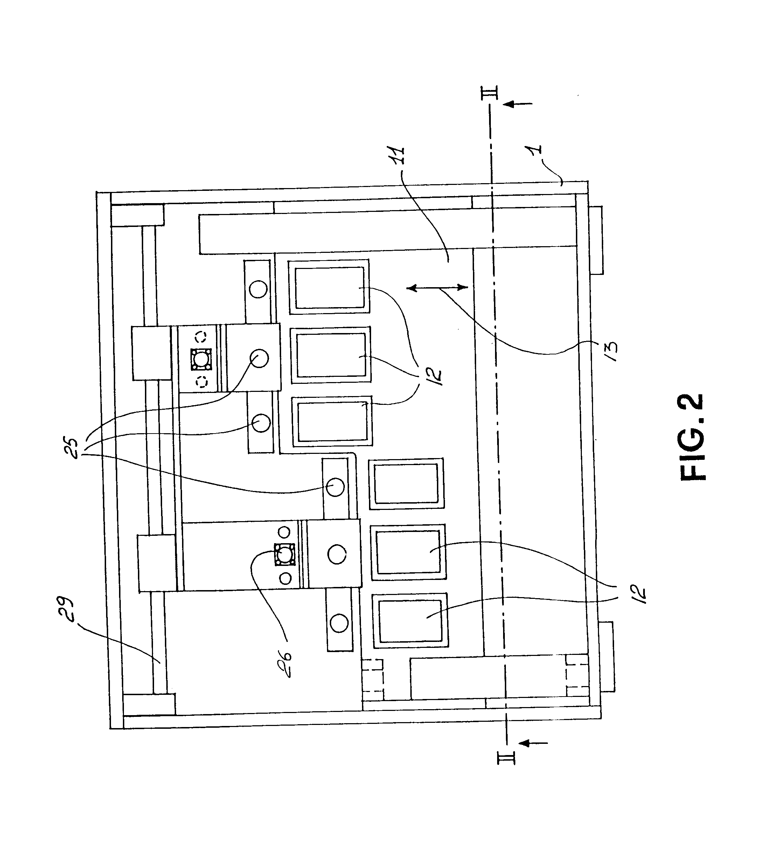

The drawer 9 is made from a plate 11 in which a plurality of holes or inserts 12 are made having the same shape as the biscuit and in the particular case of figure 2, having rectangular section while in figure 1 the biscuits have a round section (the shape may vary in accordance with the shape of the biscuit).

The drawer 9 is thus equipped with an alternating motion along the guide bars 10 according to the direction indicated by the arrows 13 and in a perpendicular direction to the translation direction of the ices.

In the particular case illustrated in figure 2, the holes or inserts 12 for the biscuits are six in number and arranged three by three in two parallel lines (the number may vary according to need).

At and above each insert 12 a hopper 16 is envisaged, which hopperfunctions as a feeding channel for the biscuits 3.

The mouth of each channel is positioned above one of the inserts 12.

A plate 14 is solid to the frame 1, which plate 14 supports six pneumatic cylinders 15, one for each hopper 16. The stem of each pneumatic cylinder 15 is solid to a horizontal plate 17 which is in its turn solid to a vertical plate 18 which supports the hopper 16.

The vertical plate 18 is solid to a sleeve 19 which slides along a guide bar 20.

The pneumatic cylinder 15 permits of lifting the whole hopper 16 from its operative position, with the unloading mouth above the insert 12 of the drawer 9, in order to effect maintenance operations in the case that inconveniences or blockages occur in the feeding flow of the biscuits or ices. Each hopper 16 is equipped at its end part, in proximity to the unloading mouth, with an elevator device of the stack of biscuits so as to avoid the plate 1, during the return phase, breaking the biscuit which is to be deposited in the insert.

The channel constituting the hopper 16 exhibits a curved development, being however perfectly vertical at the final unloading tract above the drawer 9.

This curved development of the channel avoids the formation of bridges due to biscuits which may become arranged transversally to the channel itself.

As can be seen in figure 3, an idler roller 21 idle on a shaft 22 and solid to a horizontally slidable 23 bearing is kept pressed against a cam 6, which roller 21 is connected by means of a linkage of known type and not illustrated to two support plates 24 of a suction tube group 25. In the example, each plate 24 supports three suction tubes 25.

The suction tubes 25 have the function of aspirating the biscuits which are brought to below the said suction tubes 25 by the drawer 9 and depositing the said biscuits under on the underlying layer of ice cream already deposited on an underlying biscuit.

To this end each plate 24 is equipped with an alternating movement according to the arrows 30, which movement is imparted to them by the cam 6 and they are also equipped with an alternating vertical movement imparted to them by a pneumatic cylinder 26.

In order to realise the two above-mentioned movements each suction tube-bearing plate is held up by two vertical guide bars 27 slidable on a car 28 that in its turn slides along horizontal guide bars 29.

The vertical-direction movement of each suction tube-bearing plate is realised by means of a pneumatic cylinder 26 which cylinder 26 stem is solid to the vertical guide bars 27.

## Claims

1. A feeding device of biscuits to a machine for the formation of biscuit ices of the type comprising a plurality of channels which send biscuits by means of force of gravity to a plate having inserts of the same size as the biscuits, characterised in that it comprises:
- a plurality of curved hoppers or channels (16) each of which is supported by a stem of a pneumatic cylinder (15) which permits a translation of the said hoppers or channels (16) in a vertical direction;
- a drawer (9) in which a plurality of holes or inserts (12) are bored, corresponding in number to the number of channels (16), said drawer (9) being equipped with horizontal alternating movement to bring the said holes or inserts (12) from a position underlying unloading mouths of the channels (16) to a position overlying the flow of the ices;
- a plurality of suction tubes (25) corresponding in number to the mumber of channels (16) or inserts (12), which suction tubes (25) are equipped with alternating translatory motion in a direction corresponding to the flow direction of the ices as well as being further equipped with an alternating vertical movement for positioning of a biscuit superiorly at a pre-established height with respect to a lower biscuit.
A device as in claim 1, characterised in that it comprises a cam (5) for the movement of the said drawer (9), against which cam (5) a roller (7) is elastically pressed, which roller (7) is solid to the said drawer (9) which drawer (9) is slidable on guide bars (10).
A device as in claim 1, characterised in that it comprises a cam (6) for movement of the said suction tubes (25), against which cam (6) a roller solid to a car (28) is kept, the said car (28) being slidable along horizontal guides (29).
A device as in claim 1, characterised in that it comprises a pneumatic cylinder (26) which stem is solid to a plate (24) which plate (24) supports the said suction tubes (25) so as to effect a vertical sliding of the said suction tubes (25).
